Europäisches Patentamt

European Patent Office

Office européen des brevets

(19)

(11) **EP 1 295 184 B1**

(12) **EUROPÄISCHE PATENTSCHRIFT**

(45) Veröffentlichungstag und Bekanntmachung des Hinweises auf die Patenterteilung:
**25.08.2004 Patentblatt 2004/35**

(21) Anmeldenummer: **01951414.0**

(22) Anmeldetag: **20.06.2001**

(51) Int Cl.$^7$: **G05B 13/02**

(86) Internationale Anmeldenummer:
**PCT/DE2001/002288**

(87) Internationale Veröffentlichungsnummer:
**WO 2002/001304 (03.01.2002 Gazette 2002/01)**

(54) **UNIVERSELLES VERFAHREN ZUR VORAUSBERECHNUNG VON PARAMETERN INDUSTRIELLER PROZESSE**

UNIVERSAL METHOD FOR PRE-CALCULATING THE PARAMETERS OF INDUSTRIAL PROCESSES

PROCEDE UNIVERSEL POUR LE CALCUL PREALABLE DE PARAMETRES DE PROCESSUS INDUSTRIELS

(84) Benannte Vertragsstaaten:
**AT BE CH CY DE DK ES FI FR GB GR IE IT LI LU MC NL PT SE TR**

(30) Priorität: **26.06.2000 DE 10031060**
**27.07.2000 DE 10036717**

(43) Veröffentlichungstag der Anmeldung:
**26.03.2003 Patentblatt 2003/13**

(73) Patentinhaber: **SIEMENS AKTIENGESELLSCHAFT**
**80333 München (DE)**

(72) Erfinder:
• **GADE, Dirk**
**91058 Erlangen (DE)**
• **PEUKER, Thomas**
**91083 Baiersdorf-Hagenau (DE)**

(56) Entgegenhaltungen:
**EP-A- 0 196 259      EP-A- 0 524 317**
**WO-A-00/33209        US-A- 5 519 605**
**US-A- 5 825 645       US-A- 6 026 334**
**US-A- 6 056 781       US-A- 6 064 916**

**Beschreibung**

Die Erfindung richtet sich auf ein universelles Verfahren zur Vorausberechnung oder Schätzung von Parametern industrieller Prozesse.

Größer, schneller, besser - diese Schlagworte charakterisieren die Entwicklung zu immer leistungsfähigeren industriellen Anlagen. Im Gegensatz zu der weitverbreiteten Massenfertigung bei Konsumartikeln sind daher neu zu erstellende Großanlagen oft ohne Beispiel, so dass bei der Projektierung, aber auch bei der erstmaligen Inbetriebnahme derartiger Anlagen kaum auf gültige Erfahrungswerte zurückgegriffen werden kann. Dies resultiert u.a. daraus, dass derartige Großanlagen im Gegensatz zu Kleingeräten nur unzulänglich in Laborversuchen modelliert und daher nur eingeschränkt getestet werden können. Andererseits finden in der chemischen Industrie sowie in der Hüttenindustrie ständige Neuentwicklungen von verbesserten Werkstoffen statt, die während der Inbetriebnahme einer Anlage noch gar nicht bekannt sind. Dennoch soll eine Anlage auch zur Verarbeitung derartiger Stoffe mit noch unbekannten Eigenschaften geeignet sein, so dass die hohen Anlagenkosten auf einen ausreichenden Betriebszeitraum verteilt werden können. Für diesen Anwendungsfall ist gar die Vorausschätzung von Eigenschaften wie beispielsweise Wärmekapazität, Zähigkeit, Erstarrungstemperatur, etc. künftig zu entwickelnder Werkstoffe erforderlich. So schlägt die US 6,056,781 ein Vorhersagemodell für die Prozesssteuerung in der chemischen Industrie vor. Dabei wird ein Prozessmodell verwendet, dass das dynamische Verhalten des physikalischen Prozesses wiedergibt, während ein Störungsmodell gegenwärtige bzw. zukünftige Abweichungen vom Prozessmodell simuliert.

Da allein bei der Stahlherstellung durch Beimengung von mehr als 20 unterschiedlichen Legierungselementen die unterschiedlichsten Eigenschaften erzeugt werden können, ist bei einer derartigen Abschätzung der chemischen und physikalischen Eigenschaften zukünftiger Stahllegierungen oder sonstiger Mischwerkstoffe der "gesunde Menschenverstand", der zum gegenwärtigen Zeitpunkt bei einer Extrapolation bekannter Werkstoffeigenschaften auf bislang unbekannte Produkte als einzig wirtschaftliches Kalkulationsmittel zur Verfügung steht, infolge der nicht mehr durchschaubaren Zusammenhänge völlig überfordert. Dies resultiert u.a. auch daraus, dass die für eine derartige Vorausschätzung notwendigen Informationen zumeist über eine Vielzahl von Personen und Industriebetrieben verstreut sind und aufgrund ihres Umfangs gar nicht mehr in einer einzigen Person vereinigt werden können, selbst wenn dieselbe beispielsweise über Patentschriften Zugang zu einem großen Anteil der verfügbaren Informationen hätte.

Aus diesen Nachteilen des bekannten Stands der Technik resultiert das die Erfindung initiierende Problem, ein Verfahren zur Vorausberechnung oder Schätzung von Parametern industrieller Prozesse zur Verfügung zu stellen, welches bei Zugang zu einer großen Menge von Informationen in die Lage versetzt ist, die gewünschten Parameter mit einer möglichst großen Genauigkeit vorherzubestimmen.

Die Lösung dieses Problems gelingt dadurch, dass für ein technisches Fachgebiet, beispielsweise das Hüttenwesen, ein Vektor zulässiger Eingangsgrößen eines industriellen Prozesses und/oder Produkts (im folgenden: Prozess-Eingangsgrößen) mit jeder Größe zugeordneten Definitionsbereichen und ein Vektor von zu bestimmenden Ausgangsgrößen des industriellen Prozesses und/oder Produkts (im folgenden: Prozess-Ausgangsgrößen) mit den vorausberechenbaren Prozess- und/oder Produktparametern festgelegt ist, wobei in einer Datenbank bekannte Informationen über den Prozess und/oder das Produkt hinterlegt sind und diesen Informationen Gültigkeitsbereiche für die Prozess-Eingangsgrößen zugewiesen sind, und wobei zu jedem eingegebenen Prozess-Eingangsvektor aus einem zulässigen und mit gültigen Informationen belegten Definitionsbereich gemäß den hierfür gültigen Informationen genau ein Prozess-Ausgangsvektor bestimmt wird, wobei das Verfahren für die Prozesseingangsvektoren $[Z,H,A]^T$ einen n-dimensionalen Definitionsraum und für die Prozess-Ausgangsvektoren $Y^T$ einen m-dimensionalen Werteraum aufweist, wobei die Informationen über den Prozess als wenigstens (n+1)-dimensionale Informations-Vektoren mit einem vollständigen Eingangsvektor $[Z,H,A]^T$ und einem dabei gemessenen Wert wenigstens einer Ausgangsgröße (Y) gespeichert sind.

Ein erster Schritt zur Annäherung an die Lösung des äußerst umfangreichen Problems ist eine Unterteilung in technische Fachgebiete mit jeweils in sich weitgehend abgeschlossenem Expertenwissen. Beispielsweise können die Prozesse bei der Stahlherstellung von übrigen, chemischen Verfahren weitgehend abgetrennt werden, da sich Kombinationen derartiger Anlagen allenfalls auf Hilfseinrichtungen zur Unterstützung des Hüttenwesens beschränken. Sodann werden in einem weiteren Schritt die Eingangsgrößen der zu betrachtenden Prozesse, welche direkt von außen beeinflussbar sind wie insbesondere die Zusammensetzung einer Stahlsorte, deren aktuelle Temperatur, sowie gegebenenfalls bestimmte Verfahrensschritte des Herstellungsverfahrens, von den davon zwar beeinflussten, aber zunächst unbekannten Ausgangsgrößen des Prozesses unterschieden, wie beispielsweise den chemischen, physikalischen und mechanischen Eigenschaften der durch die Be- oder Verarbeitung entstehenden Produkte, beispielsweise neuer Stahllegierungen. Sofern weitere Informationen über Abhängigkeiten der Prozess-Ausgangsgrößen von weniger interessanten Zustandsgrößen bekannt sind, beispielsweise von der Dichte, so können zusätzliche Zustandsgrößen festgelegt werden, deren tatsächliche Kenntnis für den Anwender zwar uninteressant, für die Bestimmung der gewünschten Ausgangsgrößen jedoch unerlässlich ist. Ist somit die Grundstruktur des zu betrachtenden Prozesses in Form von dessen Eingangs-, Ausgangs- sowie gegebenenfalls Zustandsgrößen festgelegt, so wird in einem weiteren Schritt das zur Verfügung stehende Wissen über die internen Zusammenhänge zwischen diesen Größen zusammengetragen und in einer Datenbank gespeichert. Infolge der Vielfalt beispielsweise im Hüttenwesen verwendbarer Legierungselemente sowie gegebenenfalls zusätzlicher Verfahrensparameter wird das verfügbare Wissen in fast allen Anwendungsfällen äußerst lückenhaft einzustufen sein, wobei die Kenntnisse bei besonders häufigen Prozessparametern dichter, bei exotischen und daher seltenen Kombinationen der Eingangsgrößen dünner sind. Demzufolge wird die Genauigkeit einer Vorhersage in den von der Technik verstärkt angewendeten Bereichen deutlich höher sein als dort, wo technisches Neuland beschritten wird. Dennoch dürfte auch bei gängigen Prozessen der Zusammenhang zwischen Ausgangs- und Eingangsgrößen nur für einzelne, konkrete Verfahrensparameter bekannt sein, sofern das betreffende, technische Verfahren nicht naturwissenschaftlich restlos untersucht und mit einem geschlossenen Gleichungssystem modellierbar ist. Von einer derartigen Informationsdichte, wie sie beispielsweise auf dem elektrischen Antriebssektor mittlerweile erreicht worden ist, können die Fachleute anderer Industriezweige nur träumen. Hier setzt die Erfindung ein, indem sie aus den lückenhaften, aber bekannten Informationen durch Interpolation für möglichst alle denkbaren Anwendungsfälle, d.h. Kombinationen von Eingangsparametern, eine Abschätzung der Ausgangsgrößen liefert, wobei ein ständiger Ansporn zur Optimierung des erfindungsgemäßen Verfahrens darin zu sehen ist, die Abweichungen der vorauszuberechnenden Parameter von den tatsächlichen Parametern durch eine ständige Verdichtung der zur Verfügung stehenden Daten gegen null streben zu lassen. Dies kann beispielsweise dadurch erfolgen, dass bei neu bearbeiteten und wissenschaftlich noch nicht völlig verstandenen Sachgebieten die zur Verfügung stehenden Informationen in Form von Messwerten gespeichert werden, wobei im Fall einer Anfrage nach Zwischenprodukten sodann eine möglichst gute Interpolation zwischen bekannten Werten vorgenommen werden soll; mit zunehmender Verdichtung der Informationen können beispielsweise anstele einzelner Messpunkte Regressionskurven gespeichert werden, die - noch ohne restloses wissenschaftliches Verständnis - eine gute Näherung der Vorausschätzung ermöglichen, schließlich können nach wissenschaftlicher Ergründung der Zusammenhänge die dabei aufgefundenen Funktionen einprogrammiert werden, so dass die Präzision des erfindungsgemäßen Verfahrens sich im Laufe der Zeit asymptotisch dem Ideal einer fehlerfreien Vorhersage von Parametern technisch noch nicht realisierter Prozesse annähert. Diese Fähigkeit des erfindungsgemäßen Verfahrens, durch Ergänzung der Datenbank zu lernen, um dadurch ständig seinen Wissensstand zu steigern, kann dazu genutzt werden, um dem stand zu steigern, kann dazu genutzt werden, um dem Anwender zusätzlich zu den vorausberechneten und/oder -geschätzten Parametern noch die Dichte des hierfür erforderlichen Wissens oder daraus abgeleitet eine Abschätzung der möglichen Rechen- oder Schätzfehler zu liefern. Wird hierbei sodann mit den für den jeweiligen Anwendungsfall anzunehmenden "worst case" gerechnet, so befindet sich der Anwender beispielsweise bei der Dimensionierung einer neu zu erstellenden Anlage stets auf der sicheren Seite, so dass die technische Veralterung einer derartigen Anlage gehemmt werden kann.

Da das erfindungsgemäße Verfahren einen n-dimensionalen Definitionsraum für die Prozess-Eingangsvektoren und einen m-dimensionalen Werteraum für die Prozess-Ausgangsvektoren aufweist, ist es möglich, dass die Informationen über den Prozess als wenigstens (n+1)-dimensionale Informations-Vektoren mit einem vollständigen Eingangsvektor und einem dabei gemessenen Wert wenigstens einer Ausgangsgröße gespeichert sind. Derartige Informationsvektoren haben erst dann einen im Rahmen des erfindungsgemäßen Verfahrens verwendbaren Informationsgehalt, wenn sie bei vollständiger Kenntnis der Eingangsgrößen wenigstens auch eine Ausgangsgröße zusätzlich spezifizieren, so dass durch entsprechende Vorgabe der Eingangsgrößen die bekannte Ausgangsgröße eingestellt werden kann. Andererseits können bei einem speziellen Eingangsvektor auch sämtliche Ausgangsgrößen gemessen und in der erfindungsgemäßen Datenbank hinterlegt worden sein, so dass sich maximal die Dimension (n+m) für einen gültigen Informations-Vektor ergibt. Im Rahmen des erfindungsgemäßen Verfahrens können ohne weiteres Informationsvektoren mit unterschiedlichen Informationen verarbeitet werden, so dass hinsichtlich mancher Ausgangsgrößen eine genauere Berechnung, bei anderen Ausgangsgrößen dagegen nur eine grobe Schätzung möglich ist. Die Dimension der Informationsvektoren richtet sich jeweils nach dem zugänglichen und in eine Datenbank einspeicherbaren Wissen. Da hierbei die Spezifikation einfach durch Eingabe der eingestellten und gemessenen Werte erfolgt, sind hierzu keinerlei Kenntnisse über das grundsätzliche Verhalten des Systems notwendig. Somit kann jede Art von Wissen über die Ausgangsgrößen, sofern zusätzlich die dabei vorgegebenen Eingangsgrößen hinlänglich bekannt sind, im Rahmen des erfindungsgemäßen Verfahrens verwertet werden.

Es hat sich als günstig erwiesen, dass als Prozess-Eingangsgrößen Informationen über Edukte, insbesondere Rohstoffe und/oder -produkte, sowie Randbedingungen des Verarbeitungsverfahrens verwendet werden. Da bei industriellen Prozessen zumeist eine Verarbeitung eines oder mehrerer Edukte zu Zwischen- oder Endprodukten erfolgt, bietet es sich an, als direkt beeinflussbare Größen vor allem die bekannten Eigenschaften der verwendbaren Rohstoffe zu verwenden, sowie die von außen steuerbaren Verfahrensparameter.

Es liegt im Rahmen der Erfindung, dass die Prozess-Ausgangsgrößen Informationen über durch den Prozess erhaltene Produkte enthalten, beispielsweise deren chemischen, physikalischen oder mechanischen Eigenschaften, sowie gegebenenfalls Informationen über Prozess-Zustandsgrößen. Für die Konzipierung einer Anlage sind sodann vor allem chemische, physikalische und mechanische Eigenschaften der Zwischen- und Endprodukte interessant, wobei dieselben von der Temperatur oder weiteren Randbedingungen abhängig sein können. Während hierbei vor allem diejenigen Eigenschaften wichtig sein können, welche die Interaktion mit äußeren Größen betreffen, beispielsweise die chemische Aggressivität, die Strom- und Wärmeleitfähigkeit, etc., so können weitere Eigenschaften, welche während des Prozesses kaum zu Tage treten, dennoch von Bedeutung für die Bestimmung der relevanten Ausgangsgrößen sein; hierunter sind beispielsweise innere Eigenschaften wie Dichte oder dergleichen zu nennen.

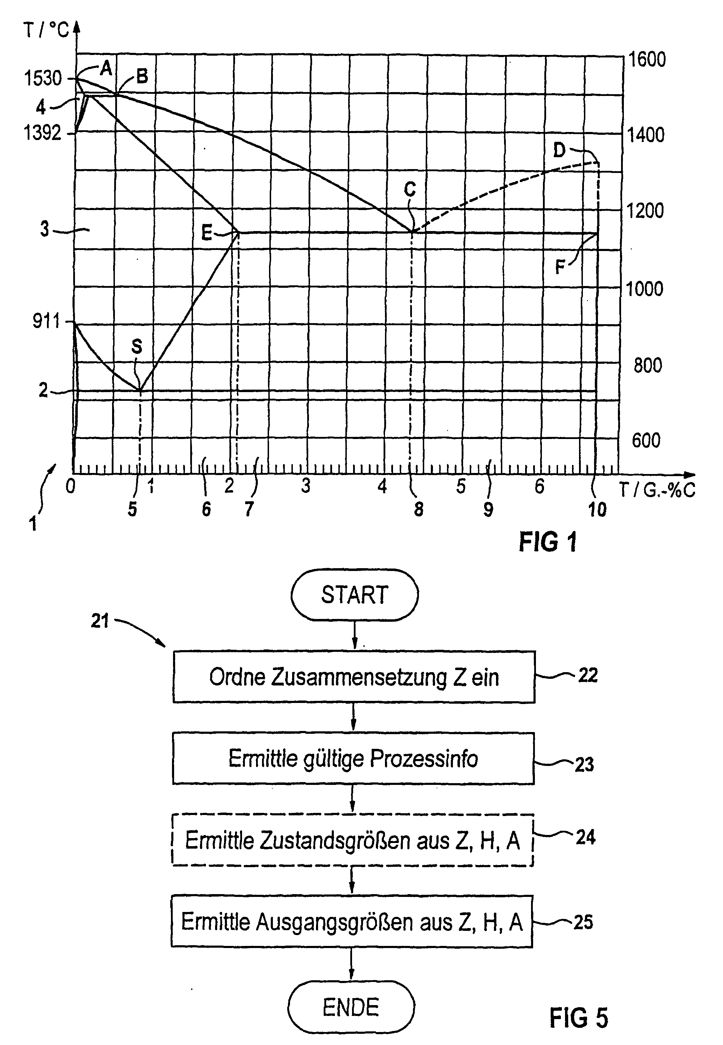

Weitere Vorteile ergeben sich, wenn die Ausgangsgrößen zu einem gegebenen Prozess-Eingangsvektor durch Interpolation Informations-Vektoren mit für den Eingangsvektor gültigen Definitionsbereichen berechnet werden. Eine große Bedeutung für das erfindungsgemäße Verfahren hat die Vorgabe von gültigen Definitionsbereichen, in denen ein Informations-Vektor noch verwendbar sein soll. Für die Werkstoffwissenschaften charakteristisch ist die Tatsache, dass sich an bestimmten Bereichsgrenzen die Strukturen eines Werkstoffs oder Prozesses grundsätzlich ändern, beispielsweise kann in dem in Fig. 1 beigefügten Eisen-Zementit-Diagramm, welches für Stähle typisch ist, eine Liquiduslinie ABCD festgelegt werden, welche die bei höheren Temperaturen als reine Schmelze vorliegende Substanz von der darunter befindlichen Mischform aus Schmelze und Kristallen trennt, ferner kann die sog. Soliduslinie AECF eingezeichnet werden, unterhalb derer die Substanz in verfestigtem Zustand vorliegt. An diesen Linien ändert eine durch ihre Zusammensetzung spezifizierte Substanz bei einer Temperaturveränderung ihren Aggregatzustand und somit auch eine Reihe ihrer physikalischen Eigenschaften wie beispielsweise Zug- und Druckfestigkeit schlagartig. Andererseits herrscht beispielsweise in dem Bereich 2 des Zustandsschaubildes 1 $\alpha$-Ferrit vor, wo das Eisengitter in kubisch-raumzentrierten $\alpha$-Mischkristallen vorliegt und die Kohlenstoffatome weitgehend aus dem Eisengitter verdrängt sind, während in dem teilweise angrenzenden Bereich 3 die austenitische Phase in Form von $\delta$-Mischkristallen mit kubisch-flächenzentriertem Eisengitter existiert, usf. Man erkennt daraus, dass Formeln, welche beispielsweise mechanische oder magnetische Eigenschaften kennzeichnen, an bestimmten Bereichsgrenzen ihre Gültigkeit verlieren, da sich sodann die Struktur des betreffenden Werkstoffs grundsätzlich ändert. Aus diesem Grunde ist es wichtig, für jeden Informations-Vektor einen Gültigkeitsbereich zu definieren, innerhalb desselben die an Hand dieses.Informationsvektors getroffenen Aussagen über die Zusammenhänge zwischen Eingangs- und Ausgangsgrößen grundsätzlich noch verwendbar sind, und ab wo die Verwendung der betreffenden Informationen sodann zu völlig falschen Ergebnissen führen würde. Daraus folgt, dass bei der Bestimmung der Ausgangsgrößen für gegebene Eingangsgrößen zunächst festzustellen ist, welche Informationen für die betreffende Zusammensetzung, Temperatur, etc. überhaupt Gültigkeit entfalten, und welche Informationen hierbei nicht mehr zutreffen. Sodann kann mit den als gültig eingestuften Informationen eine Näherung für das Verhalten der Ausgangsgrößen bei den gegebenen Eingangsgrößen ermittelt werden.

Die Erfindung sieht ferner vor, dass bei der Interpolation die Ausgangsgrößen zu einem gegebenen Prozess-Eingangsvektor durch gewichtete Addition der einander entsprechenden Ausgangsgrößen von Informations-Vektoren mit für den Eingangsvektor gültigen Definitionsbereichen berechnet werden. Die Überlagerung der als gültig eingestuften Informationen kann nach verschiedenen Interpolationsmethoden erfolgen. Obzwar auch beispielsweise Spline-Interpolationen denkbar sind, so dürfte in einer Vielzahl der Anwendungsfälle aufgrund der nahezu beliebigen Streuung der bekannten Informations-Vektoren eine Interpolation höheren Grades zur Erzeugung von Regressionsformeln, welche einer durch die Endpunkte aller bekannten Informations-Vektoren gehenden Hyperfläche entsprechen, wenig Sinn machen bzw. einen immensen Aufwand verglichen mit der damit erreichbaren Genauigkeit bedeuten. Sinnvoller erscheint demgegenüber eine lineare Interpolation, wobei sich beispielsweise die Methode der kleinsten Fehlerquadrate oder ähnliches anbietet.

Es hat sich bewährt, die Gewichtungsfaktoren für die Bestimmung einer Ausgangsgröße derart zu normieren, dass die Summe aller Gewichtungsfaktoren für die Berechnung einer Ausgangsgröße gleich 1 ist. Durch eine derartige Normierung ist-sichergestellt, dass konstante Ausgangsgrößen, d.h., Größen, auf die eine oder mehrere der Eingangsgrößen keinen Einfluss haben, durch die Interpolation unverfälscht wiedergegeben werden.

Die Erfindung lässt sich dahingehend weiterbilden, dass bei der Interpolation die Abstände der Informations-Vektoren in dem n-dimensionalen Definitionsraum für die Prozess-Eingangsvektoren bei der Bildung der Gewichtungsfaktoren für die Ausgangsgrößen des betreffenden Informations-Vektors verwendet werden. Dadurch kann für jeden Eingangsvektor eine spezifische Kombination aus den gültigen Informations-Vektoren gebildet werden, welche nicht von der absoluten Lage des Eingangsvektors, sondern von dessen relativer Lage zu den auf den n-dimensionalen Definitionsraum projizierten Informations-Vektoren abhängig ist. Somit kann der Einfluss einzelner Informations-Vektoren individuell dem jeweiligen Eingangsvektor angepasst werden.

Bei der Interpolation lassen sich gute Ergebnisse erzielen, wenn die Gewichtungsfaktoren mit zunehmendem Abstand eines Informations-Vektors von dem Eingangsvektor in dem n-dimensionalen Definitionsraum kleiner werden. Diese Maßnahme stellt sicher, dass diejenigen Informations-Vektoren, deren Projektion auf den n-dimensionalen Definitionsraum dem aktuellen Eingangsvektor am nächsten liegt, den größten Einfluss auf die Berechnung oder Abschätzung der Ausgangsgrößen ausüben.

Eine modifizierte Ausführungsform des erfindungsgemäßen Verfahrens ist dadurch charakterisiert, dass die Informationen über den Prozess als für die Ausgangsgrößen spezifische Funktionen des Eingangsvektors sowie gegebenenfalls eines internen Zustandsvektors hinterlegt sind. Diese Informationsdarstellung eröffnet die Möglichkeit, bei einer zunehmenden Verdichtung der Informationen eine Aufbereitung vorzunehmen, welche einer Komprimierung der Datenmenge entspricht, mit der nun nicht mehr eine Vielzahl von Informations-Vektoren, sondern eine oder mehrere daraus abgeleitete Funktionen hinterlegt werden, welche sodann den zusätzlichen Vorteil einer beschleunigten Berechnung der Ausgangsgrößen bieten.

Im Rahmen dieser Ausführungsform ist vorgesehen, dass die Funktionen durch Regressionsformeln aus bekannten Informations-Vektoren gebildet sind. Dies ist die einfachste Methode zur Generierung von Funktionen für die Ausgangsgrößen, welche nach mathematischen Gesetzmäßigkeiten von einer entsprechend programmierten Datenverarbeitungsanlage völlig ohne äußeres Zutun durchgeführt werden kann, wenn anhand einer beispielsweise automatischen Überprüfung festgestellt wurde, dass die Informations-Vektoren-Dichte in einem bestimmten Bereich einen vorgegebenen Wert überschritten hat. Hier kann eine lineare oder polynominale Regression mit Bestimmung der Regressionskoeffizienten in Abhängigkeit von einer, mehreren oder allen Eingangsgrößen vorgenommen werden. Fließen alle Eingangsgrößen in die Regressionsformel ein, so kann bei Auswertung derselben sofort der zugeordnete Wert der Ausgangsgröße berechnet werden; anderenfalls kann bei Auswertung einer Regressionsformel allenfalls ein Näherungswert für die betreffende Ausgangsgröße ermittelt werden, der anschließend durch eine Interpolation mittels Informations-Vektoren korrigiert werden kann, welche linear unabhängig von demjenigen Teilraum des Definitions-Raums sind, für den die Regressionsformel gültig ist. Oftmals wird beispielsweise die Temperaturabhängigkeit einer oder mehrerer Eigenschaften einer Substanz durch eine größere Anzahl von Messpunkten bestimmt, und anstelle dieser Vielzahl von Messpunkten kann auch je eine temperaturabhängige Regressionsformel für die betreffende Eigenschaft der ansonsten unveränderten Substanz verwendet werden. Aus dieser Regressionsformel kann sodann die betreffende Ausgangsgröße bei der gegebenen Temperatur für eine Substanz abgeschätzt werden, welche dem zu überprüfenden Werkstoffs möglichst ähnlich ist. Der Einfluss zusätzlicher Legierungselemente kann sodann durch Interpolation dieses Wertes mit für andere Substanzen ermittelten Messwerten berücksichtigt werden.

Das erfindungsgemäße Verfahren kann eine weitere Optimierung erfahren, indem die Funktionen in einer Matrixform angeordnet sind, die bis zu m Zeilen und bis zu (n+z) Spalten aufweist, wobei z die Dimension des für den Prozess festgelegten Zustandsvektors ist. Diese mathematische Verfahrensweise geht aus von der Erkenntnis, dass die Ausgangsgrößen eindeutig durch die Eingangsgrößen sowie durch sämtliche Zustandsgrößen des betrachteten Prozesses vorgegeben werden. Ferner macht die Erfindung hierbei Gebrauch von der Möglichkeit einer Linearisierung in der Praxis durchaus nichtlinearer Abhängigkeiten, was beispielsweise durch von verschiedenen Parametern abhängige Koeffizienten dieser Matrix realisiert werden kann. Dabei kann die Spaltenzahl dieser Matrix variieren, je nachdem, ob die Zustandsvektoren gleichzeitig als Ausgangsvektoren auftauchen, wodurch die Spaltenzahl maximal gleich n gesetzt werden kann, oder ob die Zustandsgrößen implizit berechnet werden, jedoch kein Bestandteil des Ausgangsvektors sind, wodurch die Spaltenzahl auf das Maximum von (n+z) ansteigen kann.

Die Erfindung erlaubt eine Reduzierung des Rechenaufwandes, indem der Ausgangs-Vektor oder Elemente desselben durch Multiplikation der Funktions-Matrix mit einem aus Eingangs- und Zustandsgrößen gebildeten Vektor berechnet wird. Hierdurch kann bei konsequenter Linearisierung des gesamten Prozessverhaltens eine höchst einfache Berechnungsmethode geschaffen werden, wobei der Ausgangsvektor im Idealfall durch eine einzige Matrizenmultiplikation ermittelbar ist. Oftmals kann eine derartige Linearisierung auch durch Einführung zusätzlicher Zustandsvariablen erreicht werden.

Die Erfindung lässt sich dahingehend weiterbilden, dass die Berechnung der Zustandsgrößen vor der Berechnung davon abhängiger Prozessparameter vorgenommen wird. Hierbei kann die Zustandsdifferentialgleichung

$$dc(t)/dt = A * c(t) + B * x(t); \qquad\qquad (I)$$

vor der Lösung der Ausgangsgleichung

$$y(t) = C * c(t) + D * x(t); \qquad\qquad (II)$$

erfolgen. In den meisten Fällen interessiert hierbei nicht die Dynamik des Übergangs von einem Prozesszustand in einen anderen, so dass die Bestimmung der Zustandsgrößen durch die weitere Annahme $dc/dt = 0$; $dx/dt = 0$ stark vereinfacht werden kann:

$$c = - A^{-1} * B * x; \qquad\qquad (III)$$

$$y = C * c + D * x; \tag{IV}$$

mit

$$x = [Z,H,A]^{T}$$

und

Z := Zusammensetzungsparameter
H := Strukturbestimmende Vorgeschichte, z.B. Umformparameter, Temperaturführung
A := Arbeitspunktbestimmende Größen, z.B. Temperatur, Umformparameter

Die Anwenderfreundlichkeit kann weiter gesteigert werden, indem die Prozess-Informationen für verschiedene Zustandsgrößen und/oder Ausgangsparameter unterschiedlich hinterlegt sind, d.h., als Informations-Vektoren einerseits und als Funktionen, insbesondere Regressionsformeln, andererseits. Die Berechnungsmethoden für unterschiedliche Ausgangsgrößen können bei identischem Satz der Eingangsgrößen voneinander völlig abweichen, beispielsweise kann für eine Ausgangsgröße eine vollständige Berechnungsformel unter Berücksichtigung aller Eingangsgrößen angegeben sein, während andere Ausgangsgrößen aufgrund einer dünneren Informationsdichte nur durch die einzelnen Messpunkte repräsentiert sind, so dass hier von Fall zu Fall eine Interpolation vorzunehmen ist.

Eine übersichtliche Datenbankstruktur lässt sich erreichen, wenn die Berechnungsregeln für Zustandsgrößen und/oder Prozessparameter in Tabellen hinterlegt sind, deren Elemente Verweise auf weitere Tabellen enthalten können, so dass sich eine relationale Tabellenstruktur ergibt. Diese Berechnungsstruktur erlaubt eine möglichst rechenzeitökonomische Vorgehensweise bei der Bestimmung voneinander abhängiger Größen.

Eine Steigerung der Funktionalität des erfindungsgemäßen Verfahrens ist dadurch möglich, dass in Abhängigkeit einer oder mehrerer Zustandsgrößen eine Auswahl zwischen hierfür gültigen Berechnungs-Informationen, insbesondere in Form von Tabellen bzw. Berechnungsformeln, vorgenommen wird. Wie oben bereits ausgeführt, treten an bestimmten Bereichsgrenzen, insbesondere Phasenumwandlungstemperaturen, strukturelle Änderungen des Verhaltens einer Substanz auf, wodurch bestimmte Berechnungsformeln ihre Gültigkeit verlieren und durch andere ersetzt werden müssen. Wird in diesem Fall beispielsweise die Temperatur als Zustandsgröße aufgefasst, so kann je nach den für die betreffende Substanz berechneten Umwandlungstemperaturen zwischen verschiedenen Berechnungsformeln, -tabellen oder dergleichen umgeschaltet werden.

Der Vermeidung größerer Abweichungen eines berechneten Parameters von dem idealen Wert dient eine Weiterbildung der Erfindung, wonach an den Grenzen zwischen den Gültigkeitsbereichen von unterschiedlichen Berechnungs-Informationen ein stetiger Übergang stattfindet, wobei die Ergebnisse der Berechnungen nach den in den benachbarten Bereichen gültigen Berechnungs-Informationen mit einer Gewichtung versehen werden. Dieses Näherungsverfahren kann insbesondere bei derartigen Eingangsgrößen zu einer Verbesserung der Vorhersagegenauigkeit führen, die sehr weit von allen bekannten Informations-Vektoren und insbesondere von verdichteten Bereichen derselben entfernt sind. Deshalb kann hier die Zuordnung zu einem Berechnungsbereich, dessen Formeln oder Informationen in derart großer Entfernung deutlich an Prägnanz verloren haben, zu starken Abweichungen führen, während die Zuordnung zu einem anderen Bereich, dessen Kern verdichteter Informationen ebenfalls weit entfernt ist, zu anderen, aber ebenfalls sehr unpräzisen Ergebnissen führen kann. Durch Überlagerung zweier oder mehrerer derartiger Rechenergebnisse können dieselben entweder gegenseitig bestätigt werden oder durch interpolative Bestimmung eines mittleren Wertes relativiert und reguliert werden. Für eine derartige Interpolation sind ausschließlich Bereichsgrenzen zu verwenden, an denen keine abrupte Änderung des Verhaltens einer Substanz zu erkennen ist, beispielsweise allmähliche Änderungen der Zusammensetzung, während beispielsweise Temperaturgrenzen, an denen Phasenumwandlungen stattfinden, auch durch einen abrupten Übergang von einer Berechnungsmethode auf eine andere modelliert werden müssen.

Im Rahmen einer derartigen Ergebniskorrektur kann ferner vorgesehen sein, dass die Gewichtung der verschiedenen Rechenergebnisse nach Zugehörigkeitsfunktionen vorgenommen wird, welche in dem Kernbereich der betreffenden Berechnungs-Informationen gleich 1 und außerhalb der umgebenden Übergangsbereiche gleich 0 sind und in den Übergangsbereichen Werte zwischen 0 und 1 annehmen. Diese Zugehörigkeitsfunktionen können ähnlich den Gewichtungsfaktoren einer numerischen Interpolation aufgefasst werden, indem die nach den für die betreffenden Kernbereiche gültigen Formeln ermittelten Ergebnisse mit der von der Lage des Eingangsvektors abhängigen Zugehörigkeitsfunktion multipliziert werden. Indem die Kernbereiche verschiedener Berechnungsformeln sich vorzugsweise gegenseitig ausschließen, ist für jeden Kernbereich nur die den gültigen Berechnungsformeln zugeordnete Zugehörigkeitsfunktion gleich 1, alle anderen sind dort 0, so dass die restlichen Berechnungsformeln keinen Einfluss auf das Gesamtergebnis haben. In den Übergangsbereichen sind dagegen mehrere Zugehörigkeitsfunktionen ungleich 0 und vorzugsweise auch ungleich 1, so dass alle betroffenen Berechnungsformeln in das Gesamtergebnis einfließen. Sofern hierbei sichergestellt ist, dass bei jedem Punkt eines Übergangsbereichs stets die Summe aller Zugehörigkeitsfunktionen gleich 1 ist, so findet gleichzeitig eine Normierung statt, welche dazu führt, dass in dem Idealfall, dass zwei oder mehrere, hier gültige Berechnungsformel dasselbe Ergebnis liefern, auch das Gesamtergebnis diesen bestätigten Wert annimmt.

Eine Vorkehrung zur Vermeidung von Fehlberechnungen besteht darin, dass die berechneten Ausgangsgrößen einer Plausibilitätsprüfung unterzogen werden. Bei einer präzisen Eingabe bekannter Berechnungsformeln und hierfür jeweils gültiger Definitionsbereiche ist die Wahrscheinlichkeit eines Prädiktionsfehlers äußerst gering; andererseits kann mit dünner werdender Informations-Vektor-Dichte durch eine pauschale Interpolation möglicherweise ein erheblich von dem tatsächlichen Wert abweichendes Ergebnis errechnet werden, ohne dass dies infolge der sehr vielschichtigen Zusammenhänge sogleich bemerkt würde. Deshalb sieht die Erfindung eine nachgeschaltete Plausibilitätsprüfung vor, wo generell gültige Kenntnisse und/oder Erfahrungswerte verifiziert werden müssen, bis das berechnete Ergebnis dem Anwender präsentiert werden kann. Wird eine Plausibilitätsprüfung von einem Rechenergebnis nicht bestanden, so kann dies gegebenenfalls in Verbindung mit dem falschen Ergebnis angezeigt werden, oder im Rahmen des Verfahrens wird versucht, das von den Erfahrungswerten abweichende Ergebnis bis zu dessen Ursache zurückzuverfolgen und beispielsweise auf fehlerhaft eingegebene Informations-Vektoren oder dergleichen hinzuweisen.

Die Erfindung zeichnet sich weiterhin aus durch einen Datenaustausch mit angeschlossenen Hard- und/oder Softwarebausteinen. Das erfindungsgemäße Verfahren kann sowohl als standalone-Informationsdatenbank verwendet werden, indem ein Anwender durch Spezifikation von Eingangsparametern beispielsweise unter Zuhilfenahme eines Bildschirms und einer Tastatur eine Frage an die Datenbank formuliert und die Antwort in Form des Rechenergebnisses auf einem Drucker ausgedruckt wird. Andererseits kann ein nach dem erfindungsgemäßen Verfahren arbeitendes Softwaremodul auch im Rahmen von Simulationsprogrammen als Datenlieferant für bestimmte Parameter verwendet werden, die sodann von dem Simulationsprogramm an gegebenem Ort eingesetzt werden, um die Simulationsergebnisse zu optimieren. Darüber hinaus ist es auch möglich, bei Online-Regelungen interne, nicht messbare Größen als Zustandsgrößen zu definieren; sofern dieselben nicht durch ein simples Rechenmodell bestimmt werden können, so kann das erfindungsgemäße Expertensystem gute Dienste bei der Schätzung der aktuellen Zustandsparameter anhand der bekannten Eingangsgrößen leisten. Hierbei findet ein ständiger Datenaustausch zwischen der Regelungseinrichtung und dem erfindungsgemäßen Expertensystem statt, wobei dieses über Steuerungen vorgegebene und/oder über Sensoren ermittelte Eingangs- und Zustandsgrößen empfängt und daraus die benötigten Informationen bestimmt und diese der Regelungsschaltung wiederum zur Optimierung der Regelcharakteristik übermittelt.

Schließlich entspricht es der.Lehre der Erfindung, dass die gespeicherten und/oder zu übertragenden Daten zumindest teilweise verschlüsselt sind. Da das erfindungsgemäße Expertensystem ein immenses Wissen in sich vereinigt, könnte es von Konkurrenzbetrieben für die vielfältigsten Zwecke missbraucht werden. Infolge der ganze Fachgebiete umfassenden Fähigkeiten sind die Anwendungsfälle nahezu unbegrenzt. Andererseits könnte bei einem unkritischen Gebrauch des Verfahrens beispielsweise aus nicht verifizierten Ergebnissen auch ein großer Schaden erwachsen. Deshalb ist erfindungsgemäß vorgesehen, dass das Expertensystem nur in kontrollierter Form Daten mit Peripheriegeräten austauscht, wobei die Ver- und Entschlüsselung erst in den Peripheriegeräten vorgenommen wird. Zur Steigerung der Sicherheit kann auch vorgesehen sein, dass ein Datenaustausch überhaupt erst stattfindet, sofern von einem angeschlossenen Gerät oder Softwaremodul ein festgelegter Aktivierungscode gesendet worden ist.

Weitere Merkmale, Einzelheiten, Vorteile und Wirkungen auf der Basis der Erfindung ergeben sich aus der nachfolgenden Beschreibung eines bevorzugten Ausführungsbeispiels der Erfindung sowie anhand der Zeichnung. Hierbei zeigt:

Fig. 1    ein vereinfachtes Beispiel für einen Definitionsbereich zulässiger Eingangsvektoren;

Fig. 2    einen Überblick über die Datenstruktur bei der Pflege der dem erfindungsgemäßen Verfahren assistierenden Datenbank;

Fig. 3    eine der Fig. 2 entsprechende Darstellung für die Eingabe und/oder Änderung von parameterabhängigen Größen;

Fig. 4    ein Struktogramm des erfindungsgemäßen Berechnungsverfahrens; sowie

Fig. 5    ein Struktogramm mit den bei einer Anwendung auszuführenden Schritten.

Das in Fig. 1 wiedergegebene, bekannte Eisen-Kohlenstoff-Zustandsdiagramm für den bei Stählen besonders häufigen, metastabilen Zementit-Zustand soll nur beispielhaft zur Erläuterung der unterschiedlichen Zustände dienen, deren ein aus mehreren Komponenten bestehendes Werkstoffsystem fähig ist:

Zum einen existieren für den unlegierten Eisen-Stahl bereits in dem festen Aggregatszustand in Abhängigkeit von der Temperatur unterschiedliche Kristallzustände, $\alpha$-Ferrit unterhalb von 911° C, Austenit bis zu einer Temperatur von 1.392° C, und darüber $\delta$-Ferrit bis zu dem Schmelzpunkt von 1.530° C.

Darüber hinaus sinkt mit zunehmendem Gewichtsanteil des Kohlenstoffs einerseits die Schmelztemperatur auf 1.147° C in dem Punkt C ab, andererseits ändert sich auch der Aufbau des Gesamtgefüges über den Perlit 5 über eine Mischphase 6, 7 bis hin zum Ledeburit 8 und über eine weitere Mischphase 9 bis hin zum reinen Zementit 10. Während in dem Bereich von dem unlegierten Stahl bis zum Perlit 5 noch $\alpha$-Ferrit-Kristalle vorliegen können, zeichnet sich der Bereich zwischen Perlit 5 und Ledeburit 8 dadurch aus, dass hier je nach Temperatur noch Austenit-Kristalle vorliegen können, während in dem übereutektoiden Bereich zwischen Ledeburit 8 und reinem Zementit 10 keinerlei reine Eisenkristalle mehr existieren, sondern ausschließlich noch ein Korngefüge aus Primärzementit und Ledeburit. Diese Substanzen unterscheiden sich hinsichtlich ihrer chemischen, physikalischen und werkstoffwissenschaftlichen Eigenschaften erheblich, beispielsweise sind übereutektoide Werkstoffe technologisch von geringerer Bedeutung.

Bei der Fig. 1 soll die längs der Abszisse aufgetragene, variable Zusammensetzung Z stellvertretend für einen in der Praxis vieldimensionalen Zusammensetzungsbereich der unterschiedlichsten Legierungssubstanzen aufgefasst werden, während die entlang der Ordinate aufgetragene Temperatur T stellvertretend für von der Zusammensetzung Z unabhängige Parameter A steht, die ebenfalls Einfluss auf den aktuellen Zustand (Arbeitspunkt) eines Werkstoffs ausüben. Weitere, derartige Parameter könnten sein: Strukturbestimmende Vorgeschichte H, insbesondere Wärmebehandlung wie Glühen, Tempern, etc. ferner Walzvorgänge, und Oberflächenbehandlungen wie beispielsweise Beizen, darüber hinaus aber auch aktuelle Parameter wie beispielsweise der auf der Schmelze lastende Druck oder dergleichen Die Vielzahl von Zusammensetzungs-, Vorbehandlungs- und aktuellen Parametern, welche allesamt Einfluss auf das konkrete Verhalten bestimmter chemischer, physikalischer oder werkstoffwissenschaftlicher Größen (Ausgangsgrößen) ausüben, kann als Vektor [Z, H, A] der Eingangsgrößen zusammengefasst werden.

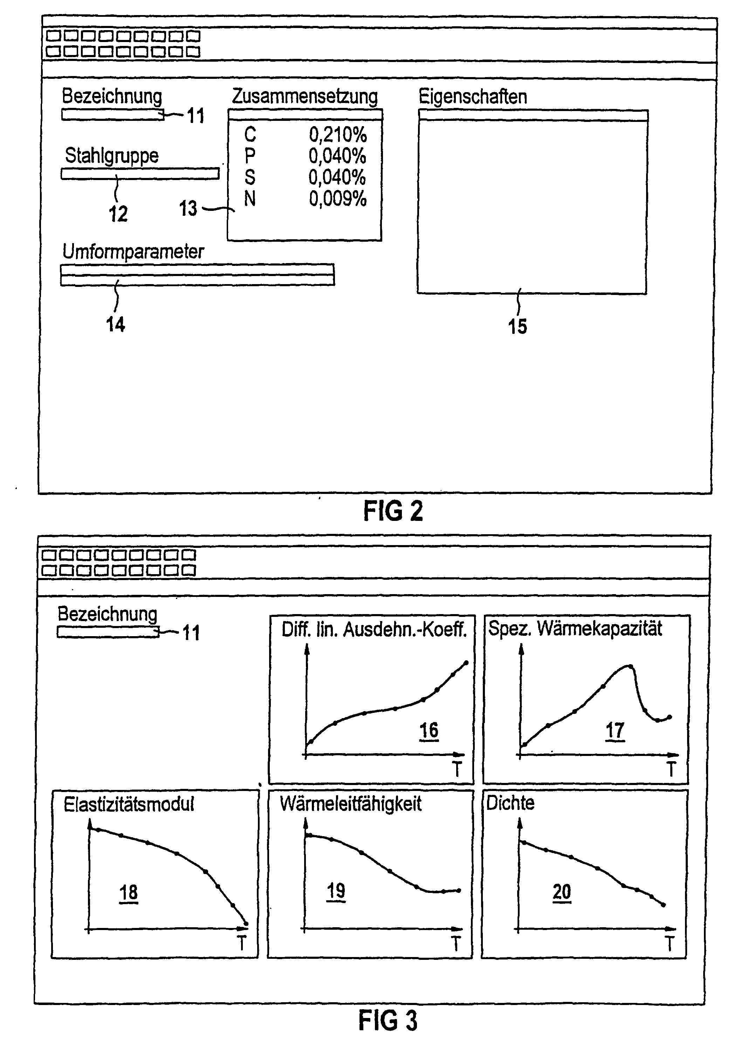

Dies lässt sich beispielsweise durch den folgenden Vektor (Tabelle 2) veranschaulichen, in welchem 24 Legierungsbestandteile zusammengefasst sind, welche zusammen mit dem Hauptlegierungsbestandteil Fe die Zusammensetzung des betreffenden Stahls definieren. Diese Zusammensetzung kann bei der Eingabe entsprechender Informationen über das Verhalten eines derartigen Werkstoffs anhand der Bildschirmdarstellung nach Fig. 2 in eine Datenbank eingegeben werden:

Nach Spezifizierung des Werkstoffes in dem Fenster 11 - "Bezeichnung", beispielsweise durch Vergabe einer fortlaufenden Nummerierung wie beispielsweise "St44", und Zuordnung zu einer Werkstoff-, insbesondere Stahlgruppe aus der folgenden Tabelle 1

Tabelle 1:

| Stahlgruppen | |
|---|---|
| **ID** | **Stahlgruppe** |
| 0 | unbekannt |
| 1 | allgemeine Baustähle und Vergütungsstähle |
| 2 | Qualitäts- und Tiefziehstähle |
| 3 | Mikrolegierte höherfeste Baustähle und Stähle für Großrohre |
| 4 | Federbandstähle |
| 5 | Werkzeugstähle für Bleche und Bänder |
| 6 | ferritische, ferritisch-perlitische Chromstähle und hitzebeständige Stähle |
| 7 | austenitische Chrom-Nickel-Stähle |
| 8 | ferritisch-austenitische Chrom-Nickelstähle |
| 9 | martensitische Chromstähle |
| 10 | Trafo- und Dynamo-Bandstähle |

gemäß Fenster 12 erfolgt die Eingabe von Informationen über diesen Stahl 11. Zunächst werden zu diesem Zweck die Eingangsgrößen spezifiziert, welche zusammen den Eingangsvektor bilden. Dies erfolgt zum einen über das Fenster 13 - "Zusammensetzung", wo die Legierungsanteile Z gemäß dem Komponentenvektor nach Tabelle 2 konkretisiert werden.

Tabelle 2:

| Legierungselemente | |
|---|---|
| **ID** | **Komponente** |
| 1 | C |
| 2 | Si |
| 3 | Mn |
| 4 | P |
| 5 | S |
| 6 | Cr |
| 7 | Ni |
| 8 | Mo |
| 9 | V |
| 10 | Nb |
| 11 | Al |
| 12 | Ti |
| 13 | Co |
| 14 | Cu |
| 15 | N |
| 16 | B |
| 17 | Sn |
| 18 | Pb |
| 19 | W |
| 20 | Zr |
| 21 | Ce |
| 22 | O |
| 23 | As |
| 24 | Ca |

Weitere Eingangsgrößen sind die Herstellungs-, insbesondere die strukturbestimmende Vorgeschichte H, welche in dem Fenster 14 zu spezifizieren sind, beispielsweise Informationen über Glüh- und Walzvorgänge wie beispielsweise Anwärmtemperatur, Walzanfangstemperatur, Fertigbandtemperatur, Haspeltemperatur, sowie gegebenenfalls weitere Informationen über Oberflächenbehandlungen oder dergleichen.

Ist solchermaßen der Eingangsvektor mit Ausnahme der Temperatur T bestimmt, so können nun in dem Fenster 15 für eine gegebene Temperatur T erhaltene Messwerte, beispielsweise Materialdaten gemäß der folgenden Tabelle 3, eingegeben werden.

Tabelle 3:

| Materialspezifische Daten | | |
|---|---|---|
| **ID Größe** | **Größe** | **Einheit** |
| A | Bruchdehnung | % |
| β | linearer Ausdehnungskoeffizient | 1/K |
| HB30 | Härte | - |

Tabelle 3: (fortgesetzt)

| Materialspezifische Daten | | |
|---|---|---|
| **ID Größe** | **Größe** | **Einheit** |
| n | n-Wert | - |
| $\varphi_{krit}$ | kritischer logarithmischer Umformgrad bei Rekristallisationsbeginn | - |
| $Q_{rek,dyn}$ | Aktivierungsenergie (dynamische Rekristallisation) | kJ/mol |
| $Q_{rek,stat}$ | Aktivierungsenergie (statische Rekristallisation) | kJ/mol |
| $Q_{rek,W}$ | Aktivierungsenergie (Kornwachstum) | kJ/mol |
| r | r-Wert | - |
| $R_e$ | Streckgrenze | MPa |
| $R_m$ | Zugfestigkeit | MPa |
| $W_k$ | Kerbschlagarbeit | J |

Hierbei sind auch weitere Materialparameter wichtig, die eine Temperaturabhängigkeit zeigen, beispielsweise der differentielle, lineare Ausdehnungskoeffizient, der anschließend in einem Graph 16 visualisiert werden kann, ferner die spezifische Wärmekapazität 17, der temperaturabhängige Elastizitätsmodul 18, die Wärmeleitfähigkeit 19 und die ebenfalls temperaturabhängige Dichte 20. Für eine Plausibilitätsprüfung aller eingegebenen Materialeigenschaften 15 können anschließend kurvenartige Darstellungen dieser Informationen 16 - 20 zur optischen Rückkopplung verwendet werden.

Die eingegebenen Informationen können als Informations-Vektoren aufgefasst werden, die aus je einem Wert der Eingangsgrößen - Zusammensetzung Z (25 Legierungsbestandteile), Umformparameter H (beispielsweise 4 Größen: Anwärmtemperatur, Walzanfangstemperatur, Fertigbandtemperatur, Haspeltemperatur) und der Temperatur T ($\in$ A) gebildet sind (im vorliegenden Fall demnach 30 Parameter), während jedem derartigen Eingangsvektor gerade ein Wert der Ausgangsgrößen 16 bis 20 (5 Größen) bzw. weiterer Größen, beispielsweise gemäß Tabelle 3 (12 Größen) und gegebenenfalls zusätzlicher Größen, beispielsweise der Fließspannung, zugeordnet wird. In dem vorliegenden Beispiel hätte demnach jeder Informations-Vektor 30 Eingangsgrößen und beispielsweise 18 Ausgangsgrößen. Andererseits muss nicht zu jedem Satz von Eingangsgrößen $[Z,H,A]^T$ auch ein vollständiger Satz von Ausgangsgrößen vorhanden sein, vielmehr macht ein Informations-Vektor bereits dann Sinn, wenn nur eine einzige Ausgangsgröße spezifiziert ist.

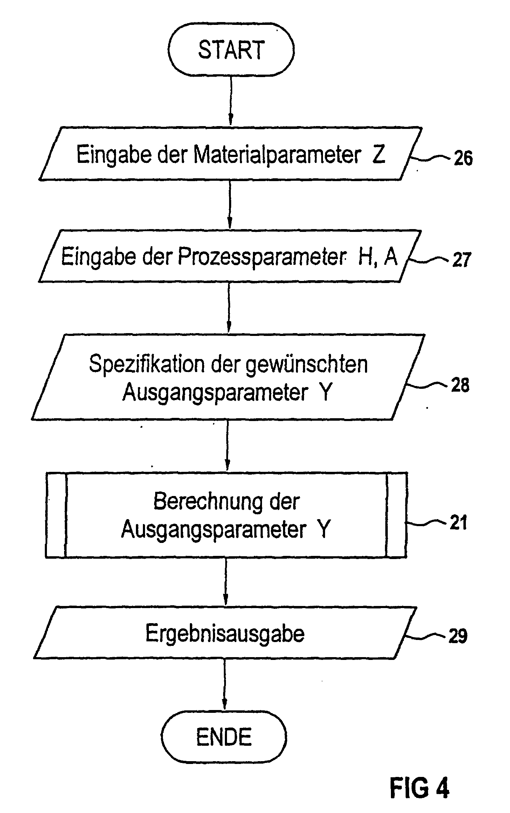

Sind solchermaßen alle bekannten Informationen in Form derartiger Informations-Vektoren in die erfindungsgemäße Datenbank eingegeben, so kann prinzipiell mit dem Verfahren 21 gemäß Fig. 4 die Bestimmung der gewünschten Ausgangsgrößen aus einem Satz von Eingangsgrößen und den eingegebenen Daten begonnen werden. Hierzu ist fast immer eine Interpolation erforderlich, sofern zu einem vorgegebenen Eingangsvektor $[Z,H,A]^T$ sich kein Informations-Vektor finden lässt, dessen Projektion auf den Definitionsraum der Eingangsgrößen sich mit dem Eingangsvektor $[Z,H,A]^T$ deckt. Für die solchermaßen fast immer erforderliche Interpolation sind jedoch weitere Informationen über die Gültigkeitsbereiche einzelner Informations-Vektoren erforderlich, beispielsweise verlieren bestimmte Ausgangsgrößen wie die Zugfestigkeit bei Überschreiten der Schmelztemperatur ihre.Bedeutung und müssen anstelle einer weiteren Extrapolation bekannter Werte zu null gesetzt werden. Die Definition derartiger Gültigkeitsbereiche muss gleichzeitig mit dem Eingeben des betreffenden Informationsvektors erfolgen, damit die Auswertung der Datenbank anschließend vollautomatisch vonstatten gehen kann.

Dieses Auswertungsverfahren 21 beginnt damit, dass bei dem in Fig. 5 dargestellten Ausführungsbeispiel der aktuell eingegebene Eingangsvektor $[Z,H,A]^T$ im Rahmen eines ersten Verfahrensschritts 22 in die betreffende Werkstoffgruppe 12 eingeordnet wird, was beispielsweise durch eine grobe Auswertung der Legierungskomponenten Z erfolgen kann. Sodann findet die zur Auswertung verwendete Datenverarbeitungsanlage eine für die betreffende Werkstoffgruppe gültige Prozessinformation (Verfahrensschritt 23), die wiederum in einzelne Bereiche 2 - 10 untergliedert sein kann, für die unterschiedliche chemische Strukturen und/oder physikalische Aggregatzustände vorliegen. Sobald solchermaßen die für den konkreten Eingangsvektor gültige Prozessinformation gefunden 23 wurde, können zunächst interne Zustandsgrößen C aus der Zusammensetzung Z und der Temperatur T ($\in$ A) sowie gegebenenfalls aus weiteren Umformparametern H ermittelt werden 24, welche zwar von dem Anwender nicht benötigt werden, jedoch für die weiteren Berechnungsschritte aufgrund von werkstoffcharakteristischen Abhängigkeiten ausschlaggebend sind (hier ist vor allem der Aggregatzustand wichtig; ferner ist beispielsweise die Dichte relevant für die Wärmeleitfähigkeit). Diese Auswertung 24 kann beispielsweise durch Interpolation zwischen den entsprechenden Parametern eingegebener Informations-Vektoren erfolgen, welche hierbei beispielsweise mit einem von dem Abstand gegenüber dem aktuellen Eingangsvektor abhängigen Gewichtungsfaktor multipliziert und sodann aufaddiert werden. Aus den solchermaßen berechneten Zustandsgrößen C sowie den Eingangsgrößen Z, H, A kann sodann in einem abschließenden Verfahrensschritt 25, vorzugsweise ebenfalls durch Interpolation, der gewünschte Vektor der Ausgangsgrößen Y ermittelt werden.

Wie Fig. 3 zeigt, können beispielsweise für temperaturabhängige Ausgangsgrößen Regressionsformeln gebildet werden, welche für beliebige Temperaturwerte T exakte Ausgangswerte Y bestimmter Ausgangsgrößen liefern. Solchenfalls kann die Dimension der vorzunehmenden Interpolation und damit der Berechnungsaufwand reduziert werden. Sofern dies durch eine ausreichende Dichte der Informations-Vektoren in einem bestimmten Zusammensetzungsbereich möglich ist, können diese Regressionsformeln auch auf mehrere oder alle Eingangsgrößen Z, H, A ausgedehnt werden, so dass im Idealfall keine Interpolation zur Auswertung mehr erforderlich ist, sondern einfach durch Einsetzen der bekannten Eingangsgrößen in die Regressionsformel die betreffende Ausgangsgröße berechnet werden kann. Anstelle von Regressionsformeln können auch wissenschaftlich nachgewiesene Abhängigkeiten in Form von bekannten, werkstoffwissenschaftlichen Formeln eingegeben werden.

Damit gestaltet sich die Anwendung des erfindungsgemäßen Verfahrens bei einer Anwendung aus dem Hüttenwesen wie folgt:

In einem ersten Schritt 26 werden die bekannten Materialparameter Z eingegeben, wodurch die hierbei verwendete, elektronische Datenverarbeitungsanlage (EDV-Anlage) den Werkstoff identifizieren kann. Diese Spezifikation kann erfolgen durch Eingabe

- der chemischen Komponenten und deren Anteile
- der Werkstoffbezeichnung, beispielsweise "st37"
- oder der Werkstoffgruppe, beispielsweise "allg. Bau- und Vergütungsstähle".

Erfolgt hierbei eine indirekte Spezifikation über die Werkstoffbezeichnung oder gar eine ungenaue Spezifikation über die Werkstoffgruppenbezeichnung, so kann von der EDV-Anlage durch beispielhafte Verwendung eines typischen Vertreters mit dieser Bezeichnung oder aus dieser Gruppe eine gültige Zusammensetzung Z festgelegt werden.

In dem darauf folgenden Schritt 27 wird die bekannte strukturbestimmende Vorgeschichte H, insbesondere über

- Umformung
- Temperaturführung

und den aktuellen Arbeitspunkt bestimmende Parameter A, wie

- Temperatur
- aktueller Umformgrad bei Walzbearbeitung
- aktuelle Umformgeschwindigkeit, etc.

eingegeben. Damit sind der EDV-Anlage alle Randbedingungen des zu berechnenden Hüttenprozesses bekannt.

Um nun die von der EDV-Anlage zu lösende Aufgabe zu definieren, wird in dem Verfahrensschritt 28 festgelegt, welche aktuellen Parameter Y die EDV-Anlage berechnen soll. Natürlich können die Eingabe-Verfahrensschritte 26 - 28 auch in einer beliebigen anderen Reihenfolge durchgeführt werden.

Ist dies geschehen, so kann die Berechnung gestartet werden, indem nun das Unterprogramm 21 aufgerufen wird. Dieses ermittelt die gewünschten Ausgangsgrößen Y als Funktion der Zusammensetzung Z, der strukturbestimmenden Vorgeschichte H und der arbeitspunktbestimmenden Parameter A sowie gegebenenfalls anhand von nicht interessierenden, jedoch die Ausgangsparameter Y beeinflussenden Zustandsparametern, beispielsweise die aktuelle Dichte. Hierbei kann auf abgespeicherte Datensätze, Regressionsgleichungen und/oder neuronale Netze zurückgegriffen werden; Diskrepanzen zwischen bekannten Informationen und aktuellen Randbedingungen werden mit Interpolations- und/oder Extrapolationsverfahren überbrückt. Hilfsweise können einzelne Werkstoffparameter, insbesondere -komponenten durch Parameter bzw. Komponenten mit ähnlichen Eigenschaften, insbesondere Wirkungen ersetzt werden, um Beziehungen zu bekannten Informationen herzustellen und zu aussagekräftigen Ergebnissen zu gelangen.

Die solchermaßen berechneten 21 Ausgangsparameter Y werden sodann im Verfahrensschritt 29 über ein Datenendgerät, beispielsweise Bildschirm oder Drucker, ausgegeben.

**Patentansprüche**

1. Universelles Verfahren zur Vorausberechnung von Parametern industrieller Prozesse und/oder Produkte, wobei für ein technisches Fachgebiet, beispielsweise das Hüttenwesen, ein Vektor $[Z,H,A]^T$ zulässiger Eingangsgrößen des industriellen Prozesses und/oder Produkts (im folgenden: Prozess-Eingangsgrößen) und ein Vektor $Y^T$ von Ausgangsgrößen des industriellen Prozesses und/oder Produkts (im folgenden: Prozess-Ausgangsgrößen) mit den vorausberechenbaren Prozess- und/oder Produktparametern festgelegt ist,
**dadurch gekennzeichnet, dass** jeder Prozess-Eingangsgröße Definitionsbereiche zugeordnet sind und in einer Datenbank bekannte Informationen über den industriellen Prozess und/oder das Produkt hinterlegt sind und diesen Informationen Gültigkeitsbereiche für die Prozess-Eingangsgrößen zugewiesen sind, und wobei zu jedem eingegebenen Prozess-Eingangsvektor $[Z,H,A]^T$ aus einem zulässigen und mit gültigen Informationen belegten Definitionsbereich gemäß den hierfür gültigen Informationen genau ein Prozess-Ausgangsvektor $Y^T$ bestimmt (24, 25) wird, wobei das Verfahren für die Prozess-Eingangsvektoren $[Z,H,A]^T$ einen n-dimensionalen Definitionsraum und für die Prozessausgangsvektoren $Y^T$ einen m-dimensionalen Werteraum aufweist, wobei die Informationen über den Prozess als wenigstens (n+1)-dimensionale Informations-Vektoren mit einem vollständigen Eingangsvektor $[Z,H,A]^T$ und einem dabei gemessenen Wert wenigstens einer Ausgangsgröße (Y) gespeichert sind.

2. Verfahren nach Anspruch 1,
**dadurch gekennzeichnet, dass** als Prozess-Eingangsgrößen Informationen (Z,H) über Edukte, insbesondere Rohstoffe und/oder -produkte, sowie den Arbeitspunkt bestimmende Randbedingungen (A) des Verarbeitungsverfahrens verwendet werden.

3. Verfahren nach Anspruch 1 oder 2,
**dadurch gekennzeichnet, dass** die Prozess-Ausgangsgrößen $Y^T$ Informationen (Y) über durch den Prozess erhaltene Produkte enthalten, beispielsweise deren chemische, physikalischen oder mechanischen Eigenschaften (16 - 20).

4. Verfahren nach einem der vorhergehenden Ansprüche,
**dadurch gekennzeichnet, dass** die Ausgangsgrößen (Y) zu einem gegebenen Prozess-Eingangsvektor $[Z,H,A]^T$ aus Informations-Vektoren mit für den Eingangsvektor $[Z,H,A]^T$ gültigen Definitionsbereichen durch Interpolation berechnet werden.

5. Verfahren nach Anspruch 4,
**dadurch gekennzeichnet, dass** bei der Interpolation die Ausgangsgrößen zu einem gegebenen Prozess-Eingangsvektor $[Z,H,A]^T$ durch gewichtete Addition der einander entsprechenden Ausgangsgrößen (Y) von Informations-Vektoren mit für den Eingangsvektor $[Z,H,A]^T$ gültigen Definitionsbereichen berechnet werden.

6. Verfahren nach Anspruch 5,
**dadurch gekennzeichnet, dass** die Gewichtungsfaktoren für die Bestimmung einer Ausgangsgröße (Y) derart normiert sind, dass die Summe aller Gewichtungsfaktoren für die Berechnung einer Ausgangsgröße (Y) gleich 1 ist.

7. Verfahren nach Anspruch 5 oder 6,
**dadurch gekennzeichnet, dass** bei der Interpolation die Abstände der Informations-Vektoren in dem n-dimensionalen Definitionsraum für die Prozess-Eingangsvektoren $[Z,H,A]^T$ bei der Bildung der Gewichtungsfaktoren für die Ausgangsgrößen (Y) des betreffenden Informations-Vektors verwendet werden.

8. Verfahren nach Anspruch 7,
**dadurch gekennzeichnet, dass** die Gewichtungsfaktoren mit zunehmendem Abstand eines Informations-Vektors in dem n-dimensionalen Definitionsraum von dem Eingangsvektor $[Z,H,A]^T$ kleiner werden.

9. Verfahren nach einem der vorhergehenden Ansprüche,
**dadurch gekennzeichnet, dass** die Informationen über den Prozess als für die Ausgangsgrößen spezifische Funktionen (Y) des Eingangsvektors $[Z,H,A]^T$ hinterlegt sind.

10. Verfahren nach Anspruch 9,
**dadurch gekennzeichnet, dass** die Funktionen (Y) durch Regressionsformeln aus bekannten Informations-Vektoren gebildet sind.

**11.** Verfahren nach einem der Ansprüche 9 oder 10, wobei sowohl einzelne Eingangs- wie auch Ausgangsgrößen (Z, H, A, Y) oder die letzteren beeinflussende, innere (praktisch nicht oder nur schwer messbare) Größen zu einem Zustandsvektor [C] zusammengefasst sein können,
**dadurch gekennzeichnet, dass** die Funktionen (Y) in einer Matrixform angeordnet sind, die bis zu m Zeilen und bis zu (n+z) Spalten aufweist, wobei z die Dimension des für den Prozess festgelegten Zustandsvektors [C] ist.

**12.** Verfahren nach einem der Ansprüche 9 bis 11,
**dadurch gekennzeichnet, dass** der Ausgangs-Vektor [Y] oder Elemente (Y) desselben durch Multiplikation der Funktions-Matrix mit einem aus Eingangs- und Zustandsgrößen gebildeten Vektor $[Z,H,A,C]^T$ berechnet wird.

**13.** Verfahren nach einem der vorhergehenden Ansprüche,
**dadurch gekennzeichnet, dass** die Prozess-Informationen für verschiedene Zustandsgrößen und/oder Ausgangsparameter (Y) unterschiedlich hinterlegt sind, d.h., als Informations-Vektoren einerseits und als Funktionen, insbesondere Regressionsformeln, andererseits.

**14.** Verfahren nach einem der vorhergehenden Ansprüche,
**dadurch gekennzeichnet, dass** die Berechnung der Zustandsgrößen vor der Berechnung davon abhängiger Prozessparameter (Y) vorgenommen wird.

**15.** Verfahren nach einem der vorhergehenden Ansprüche,
**dadurch gekennzeichnet, dass** die Berechnungsregeln für Zustandsgrößen und/oder Prozessparameter (Y) in Tabellen hinterlegt sind, deren Elemente Verweise auf weitere Tabellen enthalten können, so dass sich eine relationale Tabellenstruktur ergibt.

**16.** Verfahren nach einem der vorhergehenden Ansprüche,
**dadurch gekennzeichnet, dass** in Abhängigkeit einer oder mehrerer Zustandsgrößen eine Auswahl zwischen hierfür gültigen Berechnungs-Informationen, insbesondere in Form von Tabellen bzw. Berechnungsformeln, vorgenommen wird.

**17.** Verfahren nach einem der vorhergehenden Ansprüche,
**dadurch gekennzeichnet, dass** an den Grenzen zwischen den Gültigkeitsbereichen von unterschiedlichen Berechnungs-Informationen ein stetiger Übergang stattfindet, wobei die Ergebnisse (Y) der Berechnungen nach den in den benachbarten Bereichen gültigen Berechnungs-Informationen mit einer Gewichtung versehen werden.

**18.** Verfahren nach Anspruch 17,
**dadurch gekennzeichnet, dass** die Gewichtung der verschiedenen Rechenergebnisse (Y) nach Zugehörigkeitsfunktionen vorgenommen wird, welche in dem Kernbereich der betreffenden Berechnungs-Informationen gleich 1 und außerhalb der umgebenden Übergangsbereiche gleich 0 sind und in den Übergangsbereichen Werte zwischen 0 und 1 annehmen.

**19.** Verfahren nach einem der vorhergehenden Ansprüche,
**dadurch gekennzeichnet, dass** die berechneten Ausgangsgrößen (Y) einer Plausibilitätsprüfung unterzogen werden.

**20.** Verfahren nach einem der vorhergehenden Ansprüche,
**gekennzeichnet durch** einen Datenaustausch mit angeschlossenen Hard- und/oder Softwarebausteinen.

**21.** Verfahren nach einem der vorhergehenden Ansprüche,
**dadurch gekennzeichnet, dass** die gespeicherten und/oder die zu übertragenden Daten oder Teile derselben verschlüsselt sind.

**Claims**

**1.** Universal method for pre-calculating parameters of industrial processes and/or products, wherein, for a specialist technical field, for example the iron and steel industry, a vector $[Z, H, A]^T$ of admissible input variables of the industrial process and/or product (hereafter: process input variables), and a vector $Y^T$ of output variables of the industrial process and/or product (hereafter: process output variables), is defined with the pre-calculable process and/or product parameters,
**characterized in that** definition ranges are assigned to each process input variable and known information on the industrial process and/or the product is stored in a databank and this information is allocated ranges of validity for the process input variables, and exactly one process output vector $Y^T$ being determined (24, 25) according to the information valid for it with respect to each input process input vector $[Z, H, A]^T$ from a definition range which is admissible and provided with valid information, the method having an n-dimensional definition space for the process input vectors $[Z, H, A]^T$ and an m-dimensional value space for the process output vectors $Y^T$, the information on the process being stored as at least (n+1)-dimensional information vectors with a complete input vector $[Z, H, A]^T$ and a value measured thereby of at least one output variable (Y)

2.  Method according to Claim 1, **characterized in that** information (Z, H) on educts, in particular raw materials and/ or products, and also boundary conditions (A) of the processing process determining the operating point are used as process input variables.

3.  Method according to Claim 1 or 2, **characterized in that** the process output variables $Y^T$ contain information (Y) on products obtained by the process, for example their chemical, physical or mechanical properties (16 - 20).

4.  Method according to one of the preceding claims, **characterized in that** the output variables (Y) with respect to a given process input vector $[Z, H, A]^T$ are calculated by interpolation from information vectors with definition ranges valid for the input vector $[Z, H, A]^T$.

5.  Method according to Claim 4, **characterized in that**, in the interpolation, the output variables with respect to a given process input vector $[Z, H, A]^T$ are calculated by weighted addition of the mutually corresponding output variables (Y) of information vectors with definition ranges valid for the input vector $[Z, H, A]^T$.

6.  Method according to Claim 5, **characterized in that** the weighting factors for the determination of output variable (Y) are normalized in such a way that the sum of all the weighting factors for the calculation of an output variable (Y) is equal to 1.

7.  Method according to Claim 5 or 6, **characterized in that**, in the interpolation, the distances of information vectors in the n-dimensional definition space for the process input vectors $[Z, H, A]^T$ are used in the forming of the weighting factors for the output variables (Y) of the information vector concerned.

8.  Method according to Claim 7, **characterized in that** the weighting factors become smaller as the distance of an information vector in the n-dimensional definition space from the input vector $[Z, H, A]^T$ increases.

9.  Method according to one of the preceding claims, **characterized in that** the information on the process is stored as functions (Y) of the input vector $[Z, H, A]^T$ specific for the output variables.

10. Method according to Claim 9, **characterized in that** the functions (Y) are formed by regression formulae from known information vectors.

11. Method according to either of Claims 9 and 10, where individual input and output variables (Z, H, A, Y) or internal variables (which can be measured scarcely at all or only with difficulty) influencing the latter may be combined to form a state vector [C], **characterized in that** the functions (Y) are arranged in a matrix form which has up to m rows and up to (n+z) columns, z being the dimension of the state vector [C] defined for the process.

12. Method according to one of Claims 9 to 11, **characterized in that** the output vector [Y] or elements (Y) of the same is/are calculated by multiplication of the function matrix by a vector $[Z, H, A, C]^T$ formed from input and state variables.

13. Method according to one of the preceding claims, **characterized in that** the process information for various state variables and/or output parameters (Y) is stored differently, i.e. as information vectors on the one hand and as functions, in particular regression formulae, on the other hand.

14. Method according to one of the preceding claims, **characterized in that** the calculation of the state variables is performed before the calculation of process parameters (Y) dependent on it.

**15.** Method according to one of the preceding claims, **characterized in that** the calculation rules for state variables and/or process parameters (Y) are stored in tables, the elements of which contain references to further tables, so that a relational table structure is obtained.

**16.** Method according to one of the preceding claims, **characterized in that** a selection is performed in dependence on one or more state variables between calculation information that is valid for them, in particular in the form of tables or calculation formulae.

**17.** Method according to one of the preceding claims, **characterized in that** a steady transition takes place at the limits between the ranges of validity of different calculation information, the results (Y) of the calculations being provided with a weighting in accordance with the calculation information valid in the neighbouring ranges.

**18.** Method according to Claim 17, **characterized in that** the weighting of the various calculation results (Y) is performed on the basis of association functions, which in the core range of the calculation information concerned are equal to 1 and, outside the surrounding transitional ranges, are equal to 0 and in the transitional ranges assume values between 0 and 1.

**19.** Method according to one of the preceding claims, **characterized in that** the calculated output variables (Y) are subjected to a plausibility check.

**20.** Method according to one of the preceding claims, **characterized by** a data exchange with connected hardware and/or software modules.

**21.** Method according to one of the preceding claims, **characterized in that** the data stored and/or to be transferred, or parts of the same, are encrypted.

**Revendications**

**1.** Procédé universel pour le calcul préalable de paramètres de processus et/ou produits industriels, dans lequel, pour un domaine technique, par exemple pour la métallurgie, un vecteur $[Z, H, A]^T$ de grandeurs d'entrée autorisées du processus et/ou produit industriel (ci-dessous : grandeurs d'entrée de processus) et un vecteur $Y^T$ de grandeurs de sortie du processus et/ou produit industriel (ci-dessous : grandeurs de sortie de processus) sont fixés avec les paramètres de processus et/ou produit calculables au préalable,
   **caractérisé par le fait que** des domaines de définition sont associés à chaque grandeur d'entrée de processus, des informations connues concernant le processus et/ou produit industriel sont enregistrées dans une base de données et des domaines de validité pour les grandeurs d'entrée de processus sont attribués à ces informations, pour chaque vecteur d'entrée de processus $[Z, H, A]^T$ donné d'un domaine de définition autorisé et occupé avec des informations valides, exactement un vecteur de sortie de processus $Y^T$ étant déterminé (24, 25) selon les informations alors valides, le procédé pour les vecteurs d'entrée de processus $[Z, H, A]^T$ ayant un espace de définition à n dimensions et le procédé pour les vecteurs de sortie de processus $Y^T$ ayant un espace de définition à m dimensions, les informations concernant le processus étant mémorisées comme des vecteurs d'informations à au moins (n + 1) dimensions avec un vecteur d'entrée complet $[Z, H, A]^T$ et avec une valeur alors mesurée au moins d'une grandeur de sortie (Y).

**2.** Procédé selon la revendication 1,
   **caractérisé par le fait qu'**on utilise comme grandeurs d'entrée de processus des informations (Z, H) concernant des éduits, notamment des matières premières et/ou des produits non manufacturés, ainsi que des conditions limites (A), déterminant le point de fonctionnement, du procédé de traitement.

**3.** Procédé selon la revendication 1 ou 2,
   **caractérisé par le fait que** les grandeurs de sortie de processus $Y^T$ contiennent des informations (Y) concernant des produits obtenus par le processus, par exemple leurs propriétés chimiques, physiques ou mécaniques (16 à 20).

**4.** Procédé selon l'une des revendications précédentes,
   **caractérisé par le fait que** les grandeurs de sortie (Y) pour un vecteur d'entrée de processus $[Z, H, A]^T$ donné sont calculées par interpolation à partir de vecteurs d'informations avec des domaines de définition valables pour le vecteur d'entrée [Z, H, A]$^T$.

5. Procédé selon la revendication 4,
   **caractérisé par le fait que**, lors de l'interpolation, les grandeurs de sortie pour un vecteur d'entrée de processus [Z, H, A]$^T$ donné sont calculées par addition pondérée des grandeurs de sortie qui se correspondent (Y) de vecteurs d'informations avec des domaines de définition valables pour le vecteur d'entrée [Z, H, A]$^T$.

6. Procédé selon la revendication 5,
   **caractérisé par le fait que** les facteurs de pondération sont normés pour la détermination d'une grandeur de sortie (Y) de telle sorte que la somme de tous les facteurs de pondération pour le calcul d'une grandeur de sortie (Y) est égale à 1.

7. Procédé selon la revendication 5 ou 6,
   **caractérisé par le fait que**, lors de l'interpolation, les distances des vecteurs d'informations dans l'espace de définition à n dimensions pour les vecteurs d'entrée de processus [Z, H, A]$^T$ sont utilisées lors de la formation des facteurs de pondération pour les grandeurs de sortie (Y) du vecteur d'informations considéré.

8. Procédé selon la revendication 7,
   **caractérisé par le fait que** les facteurs de pondération diminuent lorsque augmente la distance d'un vecteur d'informations dans l'espace de définition à n dimensions au vecteur d'entrée [Z, H, A]$^T$.

9. Procédé selon l'une des revendications précédentes,
   **caractérisé par le fait que** les informations concernant le processus sont enregistrées comme fonctions (Y), spécifiques aux grandeurs de sortie, du vecteur d'entrée [Z, H, A]T.

10. Procédé selon la revendication 9,
    **caractérisé par le fait que** les fonctions (Y) sont formées par des formules de régression à partir de vecteurs d'informations connus.

11. Procédé selon l'une des revendications 9 ou 10, dans lequel aussi bien des grandeurs d'entrée que des grandeurs de sortie (Z, H, A, Y) individuelles ou des grandeurs internes (pratiquement non mesurables ou seulement difficilement mesurables) influençant ces dernières peuvent être regroupées en un vecteur d'état [C],
    **caractérisé par le fait que** les fonctions (Y) sont disposées dans une matrice qui comporte jusqu'à m lignes et jusqu'à (n + z) colonnes, z étant la dimension du vecteur d'état [C] fixé pour le processus.

12. Procédé selon l'une des revendications 9 à 11,
    **caractérisé par le fait que** le vecteur de sortie [Y] ou des éléments (Y) de celui-ci sont calculés par multiplication de la matrice de fonction par un vecteur [Z, H, A, C]$^T$ formé de grandeurs d'entrée et de grandeurs d'état.

13. Procédé selon l'une des revendications précédentes,
    **caractérisé par le fait que** les informations de processus pour différentes grandeurs d'état et/ou paramètres de sortie (Y) sont enregistrées différemment, c'est-à-dire comme vecteurs d'informations d'une part et comme fonctions, notamment comme formules de régression, d'autre part.

14. Procédé selon l'une des revendications précédentes,
    **caractérisé par le fait que** le calcul des grandeurs d'état est effectué avant le calcul de paramètres de processus (Y) dépendants de celles-ci.

15. Procédé selon l'une des revendications précédentes,
    **caractérisé par le fait que** les règles de calcul pour des grandeurs d'état et/ou paramètres de processus (Y) sont enregistrées dans des tableaux dont les éléments peuvent contenir des pointeurs sur d'autres tableaux de telle sorte qu'il en résulte une structure relationnelle de tableaux.

16. Procédé selon l'une des revendications précédentes,
    **caractérisé par le fait que**, en fonction d'une ou plusieurs grandeurs d'état, une sélection entre des informations de calcul valables pour celles-ci, notamment sous la forme de tableaux ou de formules de calcul, est effectuée.

**17.** Procédé selon l'une des revendications précédentes,
**caractérisé par le fait qu'**il existe une transition continue aux limites entre les domaines de validité de différentes informations de calcul, les résultats (Y) des calculs étant munis d'une pondération selon les informations de calcul valables dans les domaines voisins.

**18.** Procédé selon la revendication 17,
**caractérisé par le fait que** la pondération des différents résultats de calcul (Y) est effectuée selon des fonctions d'appartenance qui sont égales à 1 dans le domaine central des informations de calcul considérées, qui sont égales à 0 en dehors des domaines de transition environnants et qui prennent des valeurs entre 0 et 1 dans les domaines de transition.

**19.** Procédé selon l'une des revendications précédentes,
**caractérisé par le fait que** les grandeurs de sortie calculées (Y) sont soumises à un contrôle de vraisemblance.

**20.** Procédé selon l'une des revendications précédentes,
**caractérisé par** un échange de données avec des modules matériels et/ou logiciels raccordés.

**21.** Procédé selon l'une des revendications précédentes,
**caractérisé par le fait que** les données mémorisées et/ou les données à transmettre ou des parties de celles-ci sont cryptées.

## FIG 1

FIG 1

START

21

Ordne Zusammensetzung Z ein — 22

Ermittle gültige Prozessinfo — 23

Ermittle Zustandsgrößen aus Z, H, A — 24

Ermittle Ausgangsgrößen aus Z, H, A — 25

ENDE

FIG 5

Bezeichnung     Zusammensetzung     Eigenschaften

—11

| | |
|---|---|
| C | 0,210% |
| P | 0,040% |
| S | 0,040% |
| N | 0,009% |

Stahlgruppe

12     13

Umformparameter

14

15

**FIG 2**

Bezeichnung

—11

Diff. lin. Ausdehn.-Koeff.

<u>16</u>

T

Spez. Wärmekapazität

<u>17</u>

T

Elastizitätsmodul

<u>18</u>

T

Wärmeleitfähigkeit

<u>19</u>

T

Dichte

<u>20</u>

T

**FIG 3**

```
        ( START )
            │
            ▼
  ┌─────────────────────────────────┐
  / Eingabe der Materialparameter Z /──── 26
  └─────────────────────────────────┘
            │
            ▼
  ┌──────────────────────────────────┐
  / Eingabe der Prozessparameter H, A /──── 27
  └──────────────────────────────────┘
            │
            ▼
  ┌──────────────────────────────────┐
  /  Spezifikation der gewünschten   /
  /   Ausgangsparameter Y            /──── 28
  └──────────────────────────────────┘
            │
            ▼
  ┌──────────────────────────────────┐
  │ │      Berechnung der        │ │
  │ │    Ausgangsparameter Y     │ │──── 21
  └──────────────────────────────────┘
            │
            ▼
  ┌──────────────────────────────────┐
  /      Ergebnisausgabe             /──── 29
  └──────────────────────────────────┘
            │
            ▼
        ( ENDE )
```

**FIG 4**